(19) **Europäisches Patentamt / European Patent Office / Office européen des brevets**

(11) **EP 2 958 031 B1**

(12) **FASCICULE DE BREVET EUROPEEN**

(45) Date de publication et mention
de la délivrance du brevet:
**22.04.2020 Bulletin 2020/17**

(51) Int Cl.:
***G06F 16/954*** *(2019.01)*

(21) Numéro de dépôt: **15172744.3**

(22) Date de dépôt: **18.06.2015**

(54) **PROCÉDÉ DE PARTAGE DE NAVIGATION SUR UNE PAGE WEB AFFICHÉE PAR UN NAVIGATEUR WEB**

VERFAHREN ZUR AUFTEILUNG DER NAVIGATION AUF EINER VON EINEM WEBBROWSER ANGEZEIGTEN WEBSITE

METHOD FOR SHARING NAVIGATION ON A WEB PAGE DISPLAYED BY A WEB BROWSER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2014 FR 1455731**

(43) Date de publication de la demande:
**23.12.2015 Bulletin 2015/52**

(73) Titulaire: **Orange**
**75015 Paris (FR)**

(72) Inventeurs:
• **LAGA, Nassim**
**94600 Choisy le Roi (FR)**
• **HOLLENDER, Rémi**
**92130 Issy les Moulineaux (FR)**

(74) Mandataire: **Plasseraud IP**
**66, rue de la Chaussée d'Antin**
**75440 Paris Cedex 09 (FR)**

(56) Documents cités:
**US-A1- 2008 052 377**

• **Sam Dutton: "Getting Started with WebRTC", , 23 juillet 2012 (2012-07-23), pages 1-30, XP055103693, Extrait de l'Internet: URL:http://www.html5rocks.com/en/tutorials /webrtc/basics/ [extrait le 2014-02-21]**
• **ANONYMOUS: "WebRTC Tab Content Capture - The Chromium Projects", The Chromium Projects, 14 août 2012 (2012-08-14), pages 1-5, XP055169736, Extrait de l'Internet: URL:http://www.chromium.org/developers/des ign-documents/extensions/proposed-changes/ apis-under-development/webrtc-tab-content- capture [extrait le 2015-02-13]**

**Description**

<u>Domaine technique</u>

L'invention a trait de manière générale à la communication en temps réel entre navigateurs web sur un réseau de communication tel que l'Internet.

L'invention concerne en particulier le partage de navigation (*cobrowsing* en anglais) sur une page web affichée dans une fenêtre d'un premier navigateur web exécuté dans un premier terminal, avec au moins un second navigateur web exécuté dans un second terminal.

Selon une application particulière, l'invention peut être mise en œuvre dans le cadre de la communication entre un client et un télé-conseiller par l'intermédiaire d'une plateforme de gestion de la relation client (en anglais, *Customer Relationship Management*).

<u>Etat de la technique</u>

La navigation sur la "toile mondiale" du réseau Internet (*"worldwide web"* ou *"web"* en anglais) consiste en la consultation de fichiers de données appelés pages web (*web pages*) formatées selon un langage de balisage (*markup language*), tel que HTML (*HyperText Markup Language*) ou XML (*extensible Markup Language*). Les pages web sont généralement organisées en sites web hébergés par des serveurs sur le réseau.

Un navigateur web (*web browser*) est une application logicielle installée dans un terminal de communication d'un utilisateur, tel qu'un ordinateur personnel, et qui permet de "naviguer" sur les différents sites web et de voir les pages web situées dans ces sites web. Cette navigation utilise des protocoles de communication tels que le protocole HTTP (*HyperText Transfer Protocol*).

Dans ce contexte, le partage de navigation (*cobrowsing* en anglais) - encore désigné par navigation conjointe - sur Internet, est la possibilité pour deux personnes ou plus de voir la même page web simultanément.

A titre d'exemple, le document de brevet US2005/0091572A1 décrit un procédé de navigation partagée sur des sites web. Selon le procédé décrit, une session de navigation partagée est d'abord initiée entre un premier client (ordinateur disposant d'un navigateur web) d'un premier utilisateur et un second client d'un second utilisateur. Le premier utilisateur est initialement leader de la session et parcourt un site web en utilisant le premier client, qui envoie au second client un message de synchronisation contenant une ou plusieurs commandes indiquant une action de navigation exécutée par le premier utilisateur sur le premier client. Lorsque le second client reçoit le message de synchronisation, il applique au site web les commandes incluses dans le message.

Les applications de partage de navigation existantes, telle que celle décrite dans le document susmentionné, permettent généralement de pouvoir répercuter des actions effectuées par un utilisateur sur une ou plusieurs pages web affichées par un navigateur, dans le navigateur d'au moins un second utilisateur, mais elles ne permettent pas à plusieurs utilisateurs d'agir de manière interactive sur le contenu d'une même page web. Par ailleurs, ces applications requièrent en général que les navigateurs web des participants à une session de navigation partagée soient connectés initialement au même site web, c'est-à-dire à la même adresse web (URL - *Uniform Resource Locator*).

<u>Exposé de l'invention</u>

La présente invention propose une technique de navigation partagée sur des pages web, plus performante que les techniques de partage de navigation connues.

L'invention concerne ainsi, selon un premier aspect, un procédé de partage de navigation sur une page web affichée dans une fenêtre d'un premier navigateur web exécuté dans un premier terminal, avec au moins un second navigateur web exécuté dans un second terminal selon la revendication 1.

La caractéristique selon laquelle le partage de la page web lue dans le premier navigateur est mis en œuvre par l'envoi au second navigateur du flux vidéo d'affichage de la page web dans le premier navigateur, permet de garantir que le contenu de la page web partagée, vu par le premier utilisateur, est identique à celui vu par le second utilisateur.

En effet, dans les solutions existantes où chaque utilisateur doit charger au préalable la page web dans son navigateur, il se peut que le navigateur personnalise l'affichage de la page web, par exemple par la mise en œuvre de témoins de connexion (*cookie* en anglais) ou par paramétrage, ce qui entraine des disparités d'affichage entre les navigateurs web. Cela peut être gênant par exemple dans le cadre d'une application de l'invention à une plateforme de service client-conseiller, lorsque le conseiller ne voit pas exactement le contenu que voit le client.

Par ailleurs, grâce à l'invention, le second utilisateur peut d'une part voir, *via* la restitution du flux vidéo dans la zone de restitution incluse dans une fenêtre de son navigateur, les actions exécutées par le premier utilisateur sur le contenu de la page web (étapes (A) et (B) susmentionnées). D'autre part, à l'inverse, le second utilisateur a la possibilité de transmettre au premier navigateur des actions qu'il a déclenchées sur le contenu de la page web restitué dans son navigateur, lesquelles actions étant ensuite exécutées réellement par le premier navigateur selon les messages reçus. Le résultat d'exécution des actions dans le premier navigateur est alors visualisé quasiment immédiatement par le second utilisateur grâce au flux vidéo reçu en continu dans le second terminal (étapes C - E).

Ainsi, selon le procédé de partage d'une page web selon l'invention permet aux utilisateurs impliqués dans le partage de la page web d'agir de manière interactive sur le contenu de la page web.

Enfin, selon l'invention, les commandes ou actions exécutables par le second utilisateur ne sont pas limitées à celles définies par le contenu affiché de la page web partagée (par exemple, boutons d'actions ou liens hypertextes), les actions peuvent également être définies par une application web de type JavaScript™ préalablement chargée dans le second navigateur, par exemple pour proposer des actions telles que le surlignage, le soulignage, le dessin, l'encadrement, etc. Ces actions n'étant exécutables dans le premier navigateur (après réception de messages d'action) qu'à condition que ce dernier ait chargé au préalable avec la page web partagée une application web de type JavaScript configurée pour les exécuter.

Selon un mode de réalisation particulier de l'invention, les premier et second navigateurs web sont des navigateurs compatibles avec le standard WebRTC (détaillé plus bas dans la description). Dans ce mode de réalisation, à l'étape (A), le flux vidéo restitué dans le premier terminal est transmis en continu du premier navigateur web vers le second navigateur web selon un protocole de transmission conforme au standard WebRTC.

Grâce à l'utilisation de navigateurs web compatibles WebRTC, pour mettre en œuvre l'invention, il n'est pas nécessaire, contrairement à de nombreuses applications de partage connues, d'installer une application spécifique dans les terminaux des utilisateurs, ni même d'adjoindre à chaque navigateur web un module d'extension externe (*plugin* par exemple), dont la conception, le test, la mise à jour, et le déploiement est complexe et coûteux, et dont le téléchargement et l'installation est source d'erreurs et de désagrément pour l'utilisateur.

Selon des caractéristiques particulières de l'invention :

- l'étape (A) inclut la création dans le premier navigateur de données de référence caractéristiques de la zone active du premier navigateur, et la transmission, à destination du second terminal, en continu du flux vidéo restitué dans le premier terminal, ainsi que des données de référence ;
- l'étape (B) inclut l'obtention de premières coordonnées de repérage, relatives aux données de référence, par rapport à la zone de restitution du flux vidéo ;
- à l'étape (C) l'obtention d'une information de localisation de l'action inclut :

  - l'obtention de secondes coordonnées de repérage relatives à l'action par rapport à la zone de restitution ; et
  - l'obtention de troisièmes coordonnées de repérage relatives à l'action par rapport à la zone active du premier navigateur, en fonction des premières et secondes coordonnées de repérage, les troisièmes coordonnées de repérage formant l'information de localisation de l'action.

Ainsi, grâce aux caractéristiques mentionnées ci-dessus, l'invention utilise un mécanisme simple et astucieux pour commander l'exécution dans le premier terminal d'une action déclenchée par le second utilisateur dans le second terminal et portant sur un élément graphique de la page web partagée. Ce mécanisme se base sur l'évaluation dans le second navigateur, de la localisation d'une action dans la zone de restitution du flux vidéo, par rapport aux données de référence caractéristiques de la zone active du premier navigateur et transmises dans le flux vidéo, pour commander l'exécution de l'action sur l'élément graphique de la page web partagée, après transmission au premier navigateur du résultat de l'évaluation précitée dans un message.

Selon d'autres caractéristiques d'implémentation de l'invention :

- à l'étape (A) les données de référence sont obtenues à partir d'au moins un composant affiché dans la page web à un point représentant l'origine d'un repère associé à la zone active du premier navigateur.
- à l'étape (B) les premières coordonnées de repérage sont obtenues suite à la capture d'une image affichée dans la zone de restitution, puis au repérage, à partir de l'image capturée, de chaque composant par rapport à la zone de restitution.

En pratique, les premières coordonnées de repérage sont obtenues par

- l'envoi de l'image capturée à un dispositif serveur de traitement d'image ;
- la détection d'au moins un composant ;
- la détermination de coordonnées de localisation du composant en fonction d'un repère de localisation associé à la zone de restitution, les coordonnées de localisation formant les premières coordonnées de repérage.

Selon l'implémentation précitée de l'invention, à l'étape (C) :

- l'obtention des secondes coordonnées de repérage comprend la détermination de coordonnées de localisation de l'action par rapport au repère de localisation associé à la zone de restitution, lesquelles coordonnées de localisation formant les secondes coordonnées de repérage ;
- l'obtention desdites troisièmes coordonnées de repérage comprend :

  - la soustraction des premières coordonnées aux secondes coordonnées ;
  - la multiplication du résultat de la soustraction précédente par un facteur tenant compte de la différence de résolution entre le flux vidéo restitué dans le premier terminal et le flux vidéo restitué dans le second terminal.

Selon encore d'autres caractéristiques d'implémentation de l'invention :

- à l'étape (C) la détection d'au moins une action déclenchée par un utilisateur du second terminal appliquée à un élément graphique affiché à l'intérieur de la zone de restitution, est effectuée par le code d'une seconde page web préalablement chargée dans le second navigateur.
- le procédé comprend préalablement à l'étape (A), la connexion par chacun des premier et second navigateurs à un serveur de messagerie sur un réseau de type Internet afin d'accéder à un service de partage de navigation ; et l'envoi par le second navigateur d'une demande de partage d'écran à destination du premier navigateur et l'acceptation de la demande par le premier navigateur.

On entend par "réseau de type Internet", un réseau basé sur les technologies de communication mises en œuvre dans le réseau Internet, en particulier le réseau NW peut être aussi un réseau d'entreprise communément appelé intranet.

Le procédé de partage de page web selon l'invention est mis en œuvre par des applications logicielles (ou programmes d'ordinateur) exécutées par les premier et second navigateurs. Dans le mode de réalisation choisi, ces applications web sont des applications web de type JavaScript qui sont intégrées dans une page web téléchargée préalablement par chacun des navigateurs. S'agissant du premier navigateur cette application web est préférentiellement intégrée dans le code (HTML ou XML) de la page web à partager.

Par conséquent, selon un deuxième aspect, la présente invention concerne corrélativement une application logicielle pour la mise en œuvre d'un procédé de partage de navigation sur une page web affichée dans une fenêtre d'un premier navigateur web exécuté dans un premier terminal, avec au moins un second navigateur web exécuté dans un second terminal selon la revendication 10.

De même, selon un troisième aspect, l'invention concerne corrélativement une application logicielle pour la mise en œuvre d'un procédé de partage de navigation sur une page web affichée dans une fenêtre d'un premier navigateur web exécuté dans un premier terminal, avec au moins un second navigateur web exécuté dans un second terminal selon la revendication 11.

En pratique, les applications logicielles précitées sont constituées par des modules ou blocs fonctionnels réalisant les fonctions susmentionnées dans chacun des navigateurs considérés. Bien qu'utilisant préférentiellement un langage de programmation de type JavaScript, chaque module peut utiliser n'importe quel langage de programmation, et comprendre un ou plusieurs programmes sous forme de code source, code objet, ou de code intermédiaire entre code source et code objet, tel que dans une forme partiellement compilée, ou dans n'importe quelle autre forme souhaitable.

L'invention vise aussi par conséquent pour chacune des applications logicielles selon l'invention, un support d'enregistrement d'informations lisible par un ordinateur, et comportant le code de l'application logicielle concernée. Un tel support d'enregistrement peut être constitué par n'importe quelle entité ou dispositif capable de stocker un tel code. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, une telle application logicielle selon l'invention peut être en particulier téléchargée sur un réseau de type Internet.

Selon un dernier aspect la présente invention a pour objet un navigateur web dans lequel est exécutée une application logicielle telle que définie ci-dessus, ainsi qu'un terminal de communication dans lequel est installé un tel navigateur web selon l'invention.

Les avantages procurés par une application logicielle, un navigateur web ou un terminal, selon l'invention, sont identiques à ceux, exposés plus haut, procurés par un procédé de partage d'une page web, selon l'invention, et ne seront par conséquent pas rappelés ici.

Brève description des figures

D'autres caractéristiques et avantages de la présente invention ressortiront de la description détaillée qui suit, laquelle fait référence aux dessins annexés dans lesquels :

- la figure 1 illustre un environnement réseau dans lequel la présente invention est mise en œuvre, selon un mode de réalisation ;
- la figure 2 représente sous forme d'organigramme les principales étapes d'un procédé de partage de navigation sur une page web, selon l'invention ;
- la figures 3 représente graphiquement les échanges de messages dans l'environnement réseau de la figure 1 afin de mettre en œuvre un procédé de partage de navigation sur une page web, selon l'invention ; et
- la figure 4 représente un exemple d'écrans de deux navigateurs web en cours de partage d'une page web, conformément au procédé de partage de navigation selon l'invention.

Description détaillée de l'invention

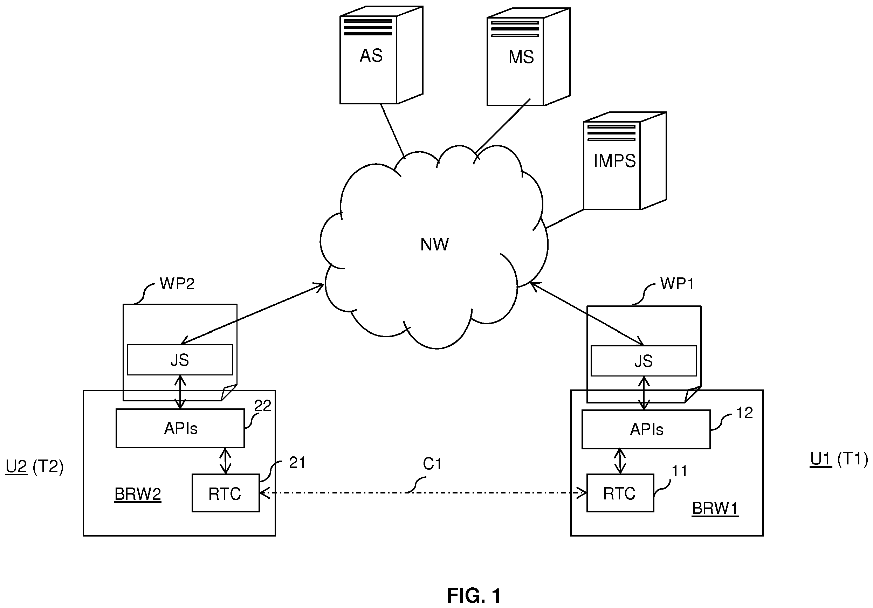

La **figure 1** représente un environnement réseau dans lequel la présente invention est mise en œuvre selon un mode de réalisation.

L'environnement représenté comprend un premier navigateur web BRW1 d'un premier terminal d'utilisateur (T1, utilisateur U1), un second navigateur BRW2 d'un second terminal d'utilisateur (T2, utilisateur U2). Les terminaux d'utilisateurs précités peuvent se connecter à un réseau de communication NW qui est un réseau de type Internet, c'est-à-dire un réseau basé sur les technologies de communication mises en œuvre dans le réseau Internet, en particulier le réseau NW peut être aussi un réseau d'entreprise communément appelé intranet.

Dans le mode de réalisation choisi et illustré, les navigateurs BRW1 et BRW2 sont des navigateurs compatibles avec une norme en cours de normalisation, conjointement par le World Wide Web Consortium (W3C) et l'Internet Engineering Task Force (IETF), et désignée par WebRTC (*Web Real-Time Communication*) au W3C et RTCWEB à l'IETF.

On rappelle ici que suite au développement du langage HTML5 (*HyperText Markup Language 5*) de nouvelles perspectives s'ouvrent aux développeurs d'applications avec la possibilité de rendre les interfaces (API - *Application Programming Interface*) avec les applications web, accessibles de façon normalisée au sein du navigateur. C'est la voie suivie par la l'IETF et le W3C avec la norme RTCWEB/WebRTC qui vise à fournir deux types de spécifications :

- une spécification de protocoles, effectuée à l'IETF ;
- une spécification d'APIs JavaScript, effectuée au W3C.

Les deux spécifications précitées visent à fournir un environnement selon lequel une application JavaScript incorporée dans n'importe quelle page web, lue par n'importe quel navigateur compatible, et autorisée de manière appropriée par son utilisateur, est capable d'établir une communication utilisant de l'audio, de la vidéo (et des données auxiliaires), sans que la plateforme du navigateur ne limite les types d'application dans lesquels cette fonctionnalité de communication peut être utilisée.

Selon la norme RTCWEB/WebRTC - désignée par WebRTC pour simplifier - un navigateur web doit implémenter trois interfaces API pour pouvoir recevoir et transmettre des données en mode streaming (parfois appelé "lecture en continu" ou "diffusion en flux" en français), ces APIs sont les suivantes :

- MediaStream : permet au navigateur d'accéder aux flux de données tels que ceux issus de la caméra (*web cam*) et du microphone du terminal de l'utilisateur ;
- RTCPeerConnection : assure les appels audio ou vidéo, avec des mécanismes de chiffrement et de gestion de bande passante (*bandwidth*) ;
- RTCDataChannel : assure la communication pair-à-pair de données génériques.

Pour obtenir plus d'informations concernant les spécifications RTCWEB/ WebRTC, on pourra consulter en particulier les documents suivants :

- WebRTC 1.0: Real-time Communication Between Browsers - W3C Editor's Draft 22 March 2013 - accessible sur Internet à l'adresse suivante :http://dev.w3.org/2011/webrtc/editor/webrtc.html#rtcpeerconnection-interface
- Overview: Real Time Protocols for Browser-based Applications - draft-ietf-rtcweb-overview-06 - February 20, 2013 - accessible sur Internet à l'adresse suivante : http://datatracker.ietf.org/doc/draft-ietf-rtcweb-overview/

Actuellement, des éditeurs de navigateur web proposent des versions expérimentales de ce nouveau service entre navigateurs, par exemple Google avec le navigateur Chrome™, Mozilla avec le navigateur Firefox™.

Le document "Getting Started with WebRTC", by Sam Dutton (http:// www.html5rocks.com/en/tutorials/webrtc/basics) décrit par exemple comment partager, sous forme de flux vidéo, le contenu d'une fenêtre d'un navigateur Web avec un autre navigateur, grâce à la technologie WebRTC.

De manière générale, lorsqu'un premier utilisateur souhaite établir une communication audio ou vidéo, depuis son navigateur web compatible WebRTC, avec un second utilisateur sur le réseau Internet, il commence par se connecter via son navigateur à un serveur d'application fournissant le service de communication WebRTC. Après une opération d'authentification éventuelle, le navigateur charge, via une page web, l'application web (application JavaScript) conforme aux spécifications RTCWEB et adaptée à interagir avec les APIs susmentionnées (conformes aux spécifications WebRTC) qui sont incorporées nativement dans le navigateur.

Ensuite, le premier utilisateur choisit, via la page web de connexion au serveur d'application, un identifiant du second utilisateur, puis entre une commande - par exemple par un clic sur un bouton d'action affiché dans la page web ouverte dans le navigateur - pour déclencher l'appel audio ou vidéo vers le second utilisateur. Typiquement, la page web ouverte dans le navigateur affiche alors un message indiquant que la connexion est en cours d'établissement. Si le second utilisateur, destinataire de l'appel, est également connecté au même service de communication WebRTC fourni par le serveur d'application, alors il pourra accepter la communication, par exemple audio ou vidéo, avec le premier utilisateur, et la communication pourra alors être établie.

A la figure 1, les navigateurs BRW1 et BRW2 étant compatibles WebRTC, ils disposent respectivement d'un ensemble 12, 22 d'interfaces API conformes aux spécifications WebRTC, et d'un module fonctionnel RTC 11, 21 conforme aux spécifications RTCWEB. Les ensembles APIs 12 et 22 sont aptes respectivement à interagir avec une application JavaScript JS incorporée dans des pages web WP1 et WP2 téléchargées respectivement par les navigateurs BRW1 et BRW2 à une adresse web de ressources hébergées par un serveur d'application AS sur le réseau NW. L'application JS fournit, conformément aux spécifications WebRTC/RTCWEB, des fonctionnalités de communication RTC notamment relatives à l'accès au service de communication temps réel WebRTC fourni par le serveur AS, et à la signalisation permettant d'établir une telle communication entre navigateurs. Ainsi, dans l'exemple illustré à la figure 1, si les deux navigateurs BRW1 et BRW2 ont téléchargé chacun la page web (WP1 et WP2) contenant l'application JS du service WebRTC alors ils peuvent établir une communication temps réel de pair à pair, C1, notamment de type voix ou vidéo.

Toujours à la figure 1, l'environnement réseau selon l'invention comporte également un serveur de messagerie MS permettant aux pages web WP1 et WP2 de communiquer entre elles via leur application JavaScript JS. En pratique, selon le mode de réalisation exposé, il s'agit d'un serveur XMPP (*Extensible Messaging and Presence Protocol*) - par exemple un serveur de messagerie instantanée haute performance connu sous le nom de *ejabberd* - qui utilise le protocole XMPP au dessus de HTTP. L'environnement réseau par ailleurs comporte un serveur de traitement d'images, IMPS, utilisé par le navigateur web BRW2 pour repérer à partir d'un flux vidéo reçu du navigateur BRW1 un composant caractéristique de la zone d'affichage de la page web WP1 dans la fenêtre du navigateur BRW1.

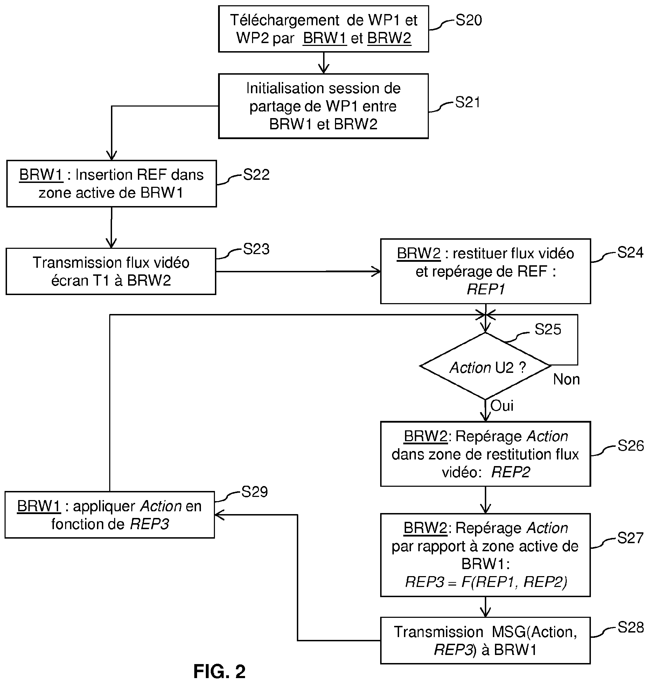

La **figure 2** représente sous forme d'organigramme les principales étapes d'un procédé de partage de navigation sur une page web, selon l'invention, mis en œuvre dans un environnement réseau tel qu'illustré à la figure 1.

Le procédé de partage de navigation selon l'invention commence par une étape S20 au cours de laquelle les utilisateurs U1 et U2 se connectent via leur navigateurs BRW1 et BRW2 à un site web correspondant à une plateforme de services hébergée par un serveur d'application AS, par exemple une plateforme de service après-vente permettant la relation entre un client (l'utilisateur U2) et un télé-conseiller (l'utilisateur U1). Afin d'établir la mise en relation entre les utilisateurs U1 et U2, les navigateurs BRW1 et BRW2 téléchargent une page web, respectivement WP1 et WP2, dont le code (HTML ou XML) inclut une application JavaScript JS configurée conformément à l'invention. Ensuite, a partir des pages web WP1 et WP2 affichées dans leur navigateur respectif, les utilisateurs U1 et U2 s'authentifient par une procédure classique à base d'identifiant et mot de passe. L'authentification de chacun des utilisateurs déclenche alors l'enregistrement des pages web auprès du serveur de messagerie MS, ce qui permet d'établir une session de communication (par exemple par messagerie instantanée) entre les pages web WP1 et WP2. La connexion par chacun des navigateurs au serveur de messagerie MS, permet d'accéder au service de partage de navigation de la manière suivante (étape S21).

A l'étape S21, l'utilisateur U2 en cliquant sur un élément graphique affiché par la page web WP2 déclenche l'envoi d'une demande de partage de la page web WP1, par l'intermédiaire du serveur de messageries MS à destination du navigateur BRW1. Ce dernier reçoit la demande, et si l'utilisateur U1 accepte cette demande via son navigateur (clic sur un bouton par exemple), alors une réponse est transmise au serveur de messagerie, qui la retransmet au navigateur BRW2. Une session de partage de la page web WP1 est alors initiée directement entre les navigateurs BRW1 et BRW2.

A l'étape S22, dans le navigateur BRW1, l'application Javacript JS de la page web WP1, insère graphiquement des données de référence, notées REF, caractéristiques de la zone d'affichage de la page web WP1 dans la fenêtre du navigateur BRW1, dite zone active du navigateur BRW1.

A l'étape S23, une session de signalisation WebRTC est établie entre les deux navigateurs, et le flux vidéo restitué à l'écran du terminal T1, incluant les données de référence REF, est dupliqué et transmis en continu à destination du navigateur BRW2 via la session de signalisation WebRTC. A l'étape S24, le flux vidéo est reçu en continu par le navigateur BRW2 et restitué à l'intérieur d'une zone de restitution incluse dans une fenêtre du navigateur BRW2. Les données de référence REF sont alors détectées et des premières coordonnées de repérage REP1, relatives aux données de référence, par rapport à la zone de restitution du flux vidéo, sont obtenues.

L'application JS de la page web WP2 est configurée pour détecter une action (par exemple un clic de souris) de l'utilisateur U2 appliquée à un composant affiché à l'intérieur de la zone de restitution du flux vidéo reçu du navigateur BRW1. A l'étape S25, si une telle action de l'utilisateur U2 est détectée, alors à l'étape S26, il est procédé dans le navigateur BRW2 au repérage de l'action détectée, c'est-à-dire à la détermination de secondes coordonnées (REP2) du composant sur lequel porte l'action (un clic de souris par exemple) par rapport à la zone de restitution du flux vidéo.

A l'étape suivante S27, il est procédé au repérage de l'action détectée par rapport à la zone active du navigateur BRW2, des troisièmes coordonnées (REP3) sont ainsi obtenues en fonction des premières (REP1) et des secondes coordonnées (REP2) précitées. A l'étape S28, un message (MSG) est envoyé du navigateur BRW2 au navigateur BRW1 par l'intermédiaire du serveur de messagerie MS, ce message contenant une information relative à un type d'action associé à l'action détectée, ainsi que les troisièmes coordonnées de repérage (REP3) obtenues précédemment (étape S27).

Enfin, à l'étape S29, le navigateur BRW1 ayant reçu le message MSG, l'application JavaScript JS de la page web WP1 détermine d'une part l'action à reproduire, et à partir des coordonnées REP3, détermine d'autre part le lieu où l'action doit être exécutée dans la zone d'affichage de la page web (WP1) dans la fenêtre du navigateur BRW1.

Une fois l'action exécutée dans le navigateur BRW1, le flux vidéo transmis en continu au navigateur BRW2, reproduit le résultat de l'action dans la zone de restitution de la fenêtre du navigateur BRW2. Si une nouvelle action de l'utilisateur U2 est détectée (S25) le processus décrit ci-dessus en référence aux étapes S26-S29 est à nouveau mis en œuvre.

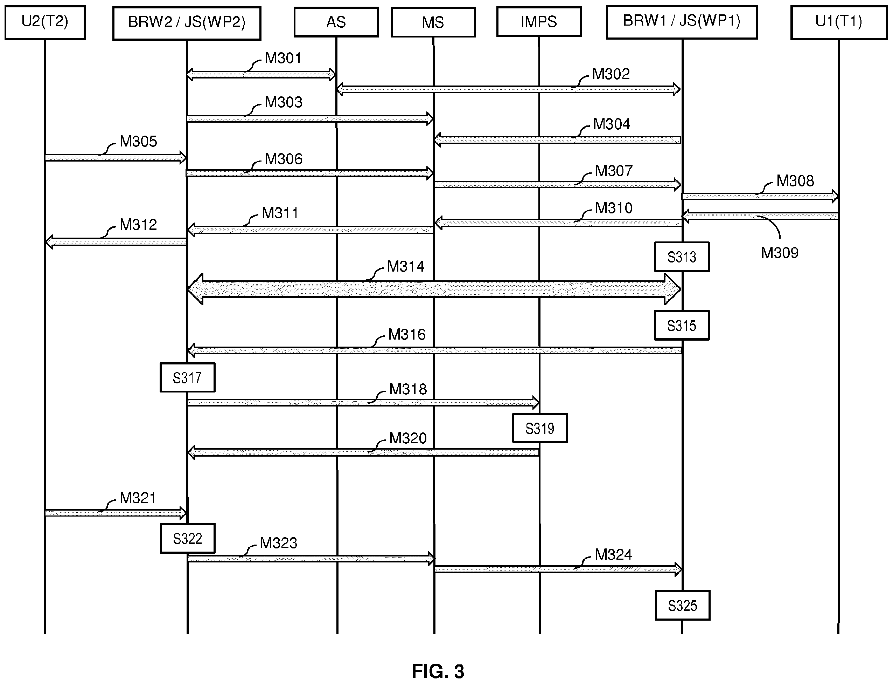

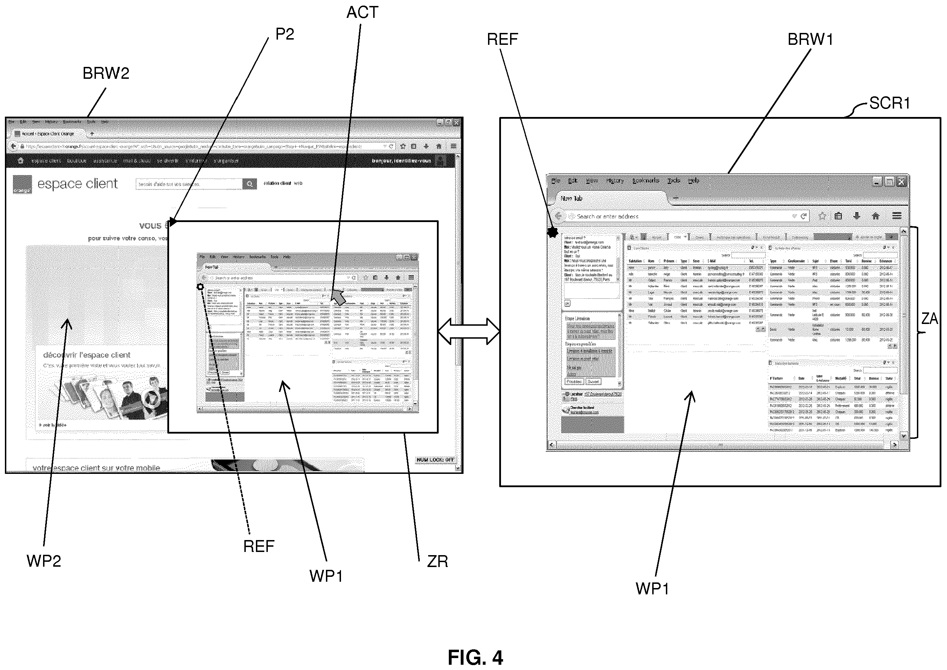

La **figure 3** détaille graphiquement les échanges de messages dans l'environnement réseau de la figure 1 afin de mettre en œuvre un procédé de partage de navigation sur une page web, selon un mode de réalisation de l'invention. La **figure 4** représente un exemple d'écrans de deux navigateurs web en cours de partage d'une page web, selon un procédé de partage de navigation conforme à l'invention.

Comme représenté à la figure 3, les échanges ont lieu entre les différentes entités exposées en relation avec la figure 1 : les deux navigateurs BRW1, BRW2, utilisés par les utilisateurs U1 et U2, les applications JavaScript (JS) associées aux pages web WP1 et WP2 préalablement téléchargées par les navigateurs, le serveur d'application AS, le serveur de messagerie MS, et le serveur de traitement d'images IMPS.

Les échanges M301 et M302 correspondent à la connexion des navigateurs BRW1 et BRW2 au serveur AS permettant d'accéder au service de partage d'écrans, et au téléchargement respectivement d'une page web (WP1, WP2) intégrant une application de type JavaScript (JS) configurée pour mettre en œuvre un procédé selon l'invention. Les fenêtres actives des navigateurs BRW1 et BRW2 sont représentées sur la figure 4, affichant respectivement les pages web WP1 et WP2. On notera dans l'exemple de la figure 4 que la fenêtre du navigateur BRW1 n'est pas affichée en mode plein écran sur l'écran SCR1 du terminal de l'utilisateur U1, tandis que celle du navigateur BRW2 est affichée en mode plein écran.

Les échanges de messages M303 et M304 correspondent à l'enregistrement des pages web WP2 et WP1 auprès du serveur de messagerie MS, c'est-à-dire leur connexion au serveur de messagerie. Cet enregistrement peut être effectué via un identifiant (login), et éventuellement un mot de passe, associés à chacune des pages web. Selon un autre choix d'implémentation, l'enregistrement peut être anonyme. Une fois enregistrées les pages web WP1 et WP2 peuvent échanger des informations. Ainsi en M305, l'utilisateur U2 (par exemple un client) fait une demande de partage de l'écran du terminal (T1) de l'utilisateur U1 (par exemple, un télé-conseiller). A cette fin, l'utilisateur U2 déclenche cette demande par une interaction avec l'affichage de la page web WP2 (par exemple un clic de souris sur un élément graphique), cette interaction déclenche l'envoi d'une commande M306 par l'application JavaScript JS (encore désignée par composant JavaScript) associée à la page web WP2 (JS(WP2)). Cette commande (M306) est envoyée automatiquement par l'application JS(WP2) vers l'application JS(WP1) chargée dans le navigateur BRW1, *via* le message M307 transmis par le serveur de messagerie MS. Suite à la réception de la commande représentant la demande de partage d'écran, par le navigateur BRW1, celui-ci provoque l'affichage (M308) d'une demande d'autorisation de partage d'écran, sous la forme par exemple d'une fenêtre intruse (*pop-up window* en anglais) affichant un message textuel demandant à l'utilisateur U1 de partager son écran. Si l'utilisateur U1 accepte (M309) - par exemple par un clic de souris sur un élément affiché dans la fenêtre *pop-up* -, alors un message de réponse (M310, M311) est généré et envoyé par l'application JavaScript JS(WP1) chargée dans le navigateur BRW1, à destination du navigateur BRW2 *via* le serveur de messagerie MS. L'utilisateur U2 est alors notifié par l'application JS(WP2) de l'acceptation du partage d'écran par l'utilisateur U1, par l'affichage d'un message textuel (M312) par le navigateur BRW2.

En pratique, dans le mode de réalisation choisi, les messages de demande (M306, M307) et de réponse (M310, M311) de partage d'écran sont constitués par des instructions de code selon le format de données JSON (*JavaScript Object Notation*) transmises selon le protocole HTTP.

Le format du message de demande de partage est le suivant :

```
{
    "action" : "shareScreen",
    "data" : ""
}
Le format du message de réponse (acceptation) est le suivant :
{
    "action" : "shareScreenAccepted",
    "data" : ""
}
```

Suite à l'acceptation par l'utilisateur U1 de la demande de partage d'écran, l'application JS(WP1) provoque (étape S313) la création dans le navigateur BRW1 de données de référence caractéristiques de la zone d'affichage de la page web dans la fenêtre du navigateur, dite zone active du premier navigateur. Cette zone active est illustrée par la référence ZA sur la figure 4. Dans le mode de réalisation décrit, ces données de référence sont constituées d'un composant graphique affiché dans la page web WP1 à un emplacement représentant l'origine d'un repère de coordonnées associé à la zone active (ZA) du navigateur BRW1. Cet emplacement de l'origine du repère (point de coordonnées (0,0)) correspond habituellement au point situé à la bordure de la fenêtre en haut et à gauche de la zone active ZA. Sur la figure 4, le composant graphique est une étoile identifiée par la référence REF.

Une session de signalisation WebRTC, M314, est alors établie entre les deux navigateurs BRW1 et BRW2, cette signalisation utilisant par exemple le protocole SIP (*Session Initiation Protocol*). Ensuite, l'application JS(WP1) récupère, à l'étape S315, le flux vidéo correspondant à l'écran SCR1 du terminal T1 et le transmet (M316) à destination du navigateur BRW2. Le flux vidéo est alors reçu par l'application JS(WP2) qui provoque son affichage (S317) - en pratique, par l'utilisation d'une balise HTML <video> - à l'intérieur de la fenêtre affichant la page web WP2 dans le navigateur BRW2, dans une zone, dite de restitution, portant la référence ZR sur la figure 4.

Toujours à l'étape S317, l'application JS(WP2) procède au repérage du composant graphique de référence (REF) dans le flux vidéo restitué dans la zone de restitution (ZR) afin d'obtenir des premières coordonnées de repérage. A cette fin, une capture d'une image du flux vidéo restitué est effectuée, puis l'image capturée est envoyée (M318) à un dispositif serveur de traitement d'image (IMPS). La capture d'une image du flux vidéo restitué dans la zone de restitution (ZR) peut être effectuée par exemple en utilisant un élément HTML5: <canvas>.

Dans le mode de réalisation décrit, le serveur IMPS est un serveur distinct sur le réseau (NW), cependant dans d'autres modes de réalisation, ce serveur peut être incorporé dans le terminal T2 de l'utilisateur U2 ou bien incorporé dans la machine hébergeant le serveur de messagerie MS ou le serveur d'application AS (voir figure 1).

Une fois l'image capturée reçue par le serveur de traitement d'image IMPS, celui-ci, à l'étape S319, analyse l'image capturée afin de détecter le composant graphique de référence (REF) (ou l'ensemble des composants graphiques s'il en existe plusieurs). Dans le mode de réalisation décrit, la détection du composant graphique tel qu'un symbole graphique, est effectuée en utilisant un algorithme connu sous le nom de "*Template matching*"*,* technique permettant de rechercher dans une image une petite portion de cette image, correspondant à une image "gabarit" (*template*). Bien sûr, d'autres algorithmes peuvent être utilisés.

Une fois que le composant ou symbole graphique de référence (REF) a été identifié dans l'image capturée, toujours à l'étape S319, le serveur de traitement d'image IMPS procède au calcul de premières coordonnées de repérage (X0, Y0) du symbole de référence (REF), par rapport à la zone de restitution (ZR) du flux vidéo. Ces premières coordonnées représentent la position du symbole de référence par rapport à un point d'origine formant repère de localisation associé à la zone de restitution ZR. En pratique, ce point d'origine de la zone de restitution est le point situé sur la bordure de la zone en haut et à gauche, et identifié par la référence P2 sur la figure 4. Les coordonnées (X0, Y0) du composant de référence (REF) dans la zone de restitution (ZR) sont transmises (M320) par le serveur de traitement d'image (IMPS) au navigateur BRW2.

Si l'utilisateur U2 du terminal T2 déclenche une action ACT (M321), par exemple un clic de souris, exécutée en correspondance avec un élément graphique, par exemple un lien URL ou un bouton d'action, affiché par le flux vidéo reçu du navigateur BRW1 dans la zone de restitution ZR, l'application JavaScript JS(WP2) du navigateur BRW2 détermine (étape S322) alors une information de localisation de l'action à partir d'une évaluation de la position de l'élément graphique associé à l'action par rapport à un repère lié à la zone d'affichage (ZA) de la page web (WP1) dans la fenêtre du navigateur BRW1. Par ailleurs, un type d'action (clic, sélection, dessin, etc.) est identifié par le code de l'application JavaScript JS(WP2).

Le calcul (étape S322) de l'information précitée de localisation de l'action commence par le calcul de secondes coordonnées de repérage relatives à l'action (ACT) détectée, par rapport à la zone de restitution (ZR). Ces secondes coordonnées, notées (X1, Y1), sont obtenues par la détermination des coordonnées de localisation de l'élément graphique correspondant à l'action, par rapport au repère de localisation (P2) associé à la zone de restitution (ZR). Puis, le calcul se poursuit par l'obtention de troisièmes coordonnées de repérage relatives à l'action (ACT) par rapport à la zone active (ZA) du navigateur BRW1, en fonction des premières (X0, Y0) et des secondes coordonnées (X1, Y1) de repérage. Il s'agit en pratique d'effectuer un changement de repère des coordonnées de l'action dans la zone de restitution, en passant du repère dont l'origine est le point P2 au repère dont l'origine est le point défini par la position du composant de référence REF.

Ainsi, il est d'abord procédé à la soustraction des premières coordonnées (X0, Y0) aux secondes coordonnées (X1, Y1), puis on multiplie le résultat de soustraction précitée par un facteur de résolution $f$ tenant compte de la différence de résolution entre le flux vidéo restitué dans le premier terminal T1 et le flux vidéo restitué dans le second terminal T2, on obtient alors les troisièmes coordonnées de repérage précitées, notées (X, Y) :

$$X = (X1 - X0) * f$$

$$Y = (Y1 - Y0) * f$$

Le facteur de résolution $f$ peut être obtenu, par exemple, par le calcul du rapport entre la longueur d'un côté déterminé de la zone active (ZA) du premier navigateur BRW1, par la longueur du côté correspondant de la zone de restitution vidéo (ZR) affichée par le second navigateur BRW2.

Une fois l'information de localisation de l'action obtenue - c'est-à-dire les troisièmes coordonnées (X, Y) susmentionnées -, celle-ci est associée au type d'action correspondant à l'action détectée, et l'ensemble est alors transmis sous forme de messages (M323, M324) du second navigateur (BRW2) vers le premier navigateur (BRW1), *via* le serveur de messagerie MS. Dans le mode de réalisation décrit, les messages contenant l'information relative à l'action (M323, M324) sont des messages échangés selon le protocole XMPP et ayant un format du type *{"action" : "", "data", ""}*.

On donne ci-après un exemple de message correspondant à une action déclenchée par un clic de souris et associée à des coordonnées (20, 40) exprimées en pixels :

```
{
    "action" : "clic",
    "data" : {
        "X" : 20,
        "Y" : 40
        }
}
```

De retour à la figure 3, une fois le message (M324) reçu par le navigateur BRW1, à l'étape S325, l'application JS associée à la page web WP1 affichée par le navigateur BRW1, utilise les informations contenues dans le message pour exécuter l'action définie par le type et les coordonnées associées, sur la page web WP1. Par exemple, si l'action est un clic et les coordonnées (X, Y) correspondent à un lien hypertexte pointant sur une adresse web (URL) alors le clic sera exécuté et le contenu correspondant à l'adresse web sera affiché par le navigateur BRW1.

Le flux vidéo transmis de manière continue du navigateur BRW1 vers le navigateur BRW2 reproduit par conséquent le résultat de chaque action initiée par l'utilisateur U2, permettant ainsi à ce dernier de voir l'affichage du résultat de ses actions sur la vidéo de la page web WP1 partagée, restituée dans la zone de restitution (ZR) affichée par son navigateur (BRW2).

Dans le mode de réalisation décrit, les messages de notification d'action transmis du navigateur BRW2 vers le navigateur BRW1, sont transmis selon le protocole XMPP par l'intermédiaire du serveur de messagerie MS, cependant selon d'autres modes de réalisation, cette transmission peut être mise en œuvre par l'intermédiaire du canal *data* de la session WebRTC établie entre les deux navigateurs.

Par ailleurs, dans l'exemple choisi et illustré, le partage d'une page web (WP1) a été décrit entre deux utilisateurs (U1, U2) pour simplifier l'exposé, mais l'invention peut être mise en œuvre pour partager une page web entre un premier navigateur et plusieurs seconds navigateurs, selon le mécanisme de fonctionnement détaillé plus haut et appliqué à chaque deuxième navigateur.

**Revendications**

1. **Procédé** de partage de navigation sur une page web (WP1) affichée dans une fenêtre d'un premier navigateur web (BRW1) exécuté dans un premier terminal (T1), avec au moins un second navigateur web (BRW2) exécuté dans un second terminal (T2), **caractérisé en ce qu'**il comporte :

(A)- l'obtention (S23) en continu par le second navigateur (BRW2) d'un flux vidéo restitué dans le premier terminal (T1), ledit flux étant transmis en continu par le premier terminal à destination du second terminal et comprenant les données d'affichage de la page web (WP1) et des données de référence (REF) caractéristiques d'une zone d'affichage de ladite page web (WP1) dans la fenêtre du premier navigateur, dite zone active (ZA) du premier navigateur, lesdites données de référence étant insérées graphiquement dans la zone active par le premier navigateur;

(B)- la restitution (S24) du flux vidéo dans une zone de restitution (ZR) incluse dans une fenêtre du second navigateur (BRW2) ;

(C)- suite à la détection (S25) d'au moins une action (ACT) déclenchée par un utilisateur (U2) du second terminal (T2), appliquée à au moins un élément graphique affiché à l'intérieur de la zone de restitution (ZR), obtention (S26, S27) d'une information de localisation de l'action à partir d'une évaluation de la position dudit élément graphique par rapport à un repère lié à la zone active (ZA) du premier navigateur, ladite information de localisation étant déterminée en fonction de premières données de repérage relatives aux données de référence par rapport à la zone de restitution ;

(D)- transmission (S28) au premier navigateur d'un message incluant un type d'action associé à l'action détectée et ladite information de localisation de l'action ; et

(E)- application (S29) de ladite action à ladite page web (WP1) dans la fenêtre du premier navigateur en fonction du contenu dudit message.

2. Procédé selon la revendication 1, dans lequel :

- l'étape (A) inclut la création dans le premier navigateur (BRW1) des données de référence (REF) caractéristiques de ladite zone active (ZA) du premier navigateur, ;
- l'étape (B) inclut l'obtention des premières coordonnées de repérage, relatives aux données de référence (REF), par rapport à la zone de restitution (ZR) du flux vidéo.

3. Procédé selon la revendication 2, dans lequel à l'étape (C) l'obtention d'une information de localisation de l'action inclut :

- l'obtention de secondes coordonnées de repérage relatives à ladite action (ACT) par rapport à la zone de restitution (ZR) ; et
- l'obtention de troisièmes coordonnées de repérage relatives à ladite action (ACT) par rapport à ladite zone active (ZA) du premier navigateur, en fonction desdites premières et secondes coordonnées de repérage, lesdites troisièmes coordonnées de repérage formant ladite information de localisation de l'action.

4. Procédé selon la revendication 1, dans lequel à l'étape (A) lesdites données de référence sont obtenues à partir d'au moins un composant (REF) affiché dans la page web (WP1) à un point représentant l'origine d'un repère associé à la zone active (ZA) du premier navigateur (BRW1).

5. Procédé selon la revendication 4, dans lequel à l'étape (B) lesdites premières coordonnées de repérage sont obtenues suite à la capture d'une image affichée dans ladite zone de restitution (ZR), puis au repérage, à partir de l'image capturée, de chaque composant (REF) par rapport à ladite zone de restitution.

6. Procédé selon la revendication 5, comprenant :

- l'envoi de l'image capturée à un dispositif serveur de traitement d'image ;
- la détection d'au moins un composant ;
- la détermination de coordonnées de localisation dudit composant en fonction d'un repère de localisation (P2) associé à ladite zone de restitution, lesdites coordonnées de localisation formant lesdites premières coordonnées de repérage.

7. Procédé selon la revendications 6, dans lequel à l'étape (C), l'obtention desdites secondes coordonnées de repérage comprend la détermination de coordonnées de localisation de ladite action par rapport au repère de localisation associé à ladite zone de restitution, lesquelles coordonnées de localisation formant lesdites secondes coordonnées de repérage.

8. Procédé selon la revendication 7 dans lequel, à l'étape (C), l'obtention desdites troisièmes coordonnées de repérage comprend :

- la soustraction desdites premières coordonnées auxdites secondes coordonnées ;
- la multiplication du résultat de la soustraction précédente par un facteur tenant compte de la différence de résolution entre le flux vidéo restitué dans le premier terminal et le flux vidéo restitué dans le second terminal.

**9.** Procédé selon l'une quelconque des revendications 1 à 8, dans lequel les premier et second navigateurs web sont des navigateurs compatibles avec le standard WebRTC, à l'étape (A) le flux vidéo restitué dans le premier terminal étant transmis en continu du premier navigateur web vers le second navigateur web selon un protocole de transmission conforme au standard WebRTC.

**10. Application logicielle** (JS(WP2)) pour la mise en œuvre d'un procédé de partage de navigation sur une page web (WP1) affichée dans une fenêtre d'un premier navigateur web (BRW1) exécuté dans un premier terminal (T1), avec au moins un second navigateur web (BRW2) exécuté dans un second terminal (T2), ladite application logicielle comprenant des instructions de code dont l'exécution par le second navigateur web permet :

- l'obtention en continu par le second navigateur d'un flux vidéo restitué dans et transmis par le premier terminal, ledit flux comprenant les données d'affichage de la page web et des données de référence (REF) caractéristiques d'une zone d'affichage de ladite page web (WP1) dans la fenêtre du premier navigateur, dite zone active (ZA) du premier navigateur, lesdites données de référence étant insérées graphiquement dans la zone active par le premier navigateur;
- la restitution du flux vidéo dans une zone de restitution incluse dans une fenêtre du second navigateur ;
- suite à la détection d'au moins une action déclenchée par un utilisateur du second terminal, appliquée à au moins un élément graphique affiché à l'intérieur de la zone de restitution, obtention d'une information de localisation de l'action à partir d'une évaluation de la position dudit élément graphique par rapport à un repère lié à la zone active (ZA) du premier navigateur, ladite information de localisation étant déterminée en fonction de premières données de repérage relatives aux données de référence par rapport à la zone de restitution ;
- transmission au premier navigateur d'un message incluant un type d'action associé à l'action détectée et ladite information de localisation de l'action, en vue de l'application de ladite action à ladite page web dans la fenêtre du premier navigateur en fonction du contenu dudit message.

**11. Application logicielle** (JS(WP1)) pour la mise en œuvre d'un procédé de partage de navigation sur une page web (WP1) affichée dans une fenêtre d'un premier navigateur web (BRW1) exécuté dans un premier terminal (T1), avec au moins un second navigateur web (BRW2) exécuté dans un second terminal (T2), ladite application logicielle comprenant des instructions de code dont l'exécution par le premier navigateur web permet :

- la création dans le premier navigateur (BRW1) de données de référence (REF) caractéristiques de la zone d'affichage de ladite page web (WP1) dans la fenêtre du premier navigateur, dite zone active (ZA) du premier navigateur, lesdites données de référence étant insérées graphiquement dans la zone active et la transmission en continu, à destination du second terminal, du flux vidéo restitué dans le premier terminal, ainsi que desdites données de référence (REF) ;
- la réception en provenance du second navigateur d'un message incluant, d'une part, un type d'action associé à une action déclenchée par un utilisateur du second terminal et appliquée à au moins un élément graphique affiché à l'intérieur d'une zone de restitution du flux vidéo dans le second terminal, et d'autre part, une information de localisation de l'action, obtenue à partir d'une évaluation de la position dudit élément graphique par rapport auxdites données de référence (REF), ladite information de localisation étant déterminée en fonction de premières données de repérage relatives aux données de référence par rapport à la zone de restitution ;
- l'application de ladite action à ladite page web dans la fenêtre du premier navigateur en fonction du contenu dudit message.

**12. Navigateur** web (BRW1, BRW2) dans lequel est exécutée une application logicielle (JS) selon la revendication 10 ou selon la revendication 11.

**13. Terminal** de communication (T1, T2) dans lequel est installé un navigateur web selon la revendication 12, ledit terminal de communication étant configuré pour être utilisé comme premier ou second terminal dans un procédé de partage de navigation sur une page Web selon une quelconque des revendications 1 à 9.

## EP 2 958 031 B1

**Patentansprüche**

1. Verfahren zum Teilen der Navigation auf einer Webseite (WP1), die in einem Fenster eines ersten Webbrowsers (BRW1) angezeigt wird, der auf einem ersten Endgerät (T1) ausgeführt wird, wobei mindestens ein zweiter Webbrowser (BRW2) auf einem zweiten Endgerät (T2) ausgeführt wird, **dadurch gekennzeichnet, dass** es Folgendes aufweist:

   (A)- Kontinuierliches Erhalten (S23) eines auf dem ersten Endgerät (T1) wiedergegebenen Videostroms durch den zweiten Browser (BRW2), wobei der Strom kontinuierlich von dem ersten Endgerät zu dem zweiten Endgerät übertragen wird und die Anzeigedaten der Webseite (WP1) und Referenzdaten (REF) aufweist, die für einen Anzeigebereich der Webseite (WP1) in dem Fenster des ersten Browsers, genannt aktiver Bereich (ZA) des ersten Browsers, charakteristisch sind, wobei die Referenzdaten durch den ersten Browser grafisch in den aktiven Bereich eingefügt werden;
   (B)- Wiedergeben (S24) des Videostroms in einem Wiedergabebereich (ZR), der sich in einem Fenster des zweiten Browsers (BRW2) befindet;
   (C)- nach dem Erkennen (S25) von mindestens einer Aktion (ACT), die von einem Benutzer (U2) des zweiten Endgeräts (T2) ausgelöst und auf mindestens ein grafisches Element angewendet wird, das in dem Wiedergabebereich (ZR) angezeigt wird, Erhalten (S26, S27) einer Lokalisierungsinformation ausgehend von einer Bewertung der Position des grafischen Elements im Verhältnis zu einem Koordinatensystem, das mit dem aktiven Bereich (ZA) des ersten Browsers verknüpft ist, wobei die Lokalisierungsinformation in Abhängigkeit von ersten Ortungsdaten bezüglich der Referenzdaten im Verhältnis zum Wiedergabebereich bestimmt wird;
   (D)-Übertragen (S28) einer Nachricht an den ersten Browser, die einen Aktionstyp beinhaltet, der der erkannten Aktion zugeordnet ist, sowie die Lokalisierungsinformation der Aktion; und
   (E)- Anwenden (S29) der Aktion auf die Webseite (WP1) in dem Fenster des ersten Browsers in Abhängigkeit vom Inhalt der Nachricht.

2. Verfahren nach Anspruch 1, wobei:

   - der Schritt (A) das Erzeugen von Referenzdaten (REF), die für den aktiven Bereich (ZA) des ersten Browsers charakteristisch sind, in dem ersten Browser (BRW1) beinhaltet;
   - der Schritt (B) das Erhalten von ersten Ortungskoordinaten bezüglich der Referenzdaten (REF) im Verhältnis zum Wiedergabebereich (ZR) des Videostroms beinhaltet.

3. Verfahren nach Anspruch 2, wobei im Schritt (C) das Erhalten einer Lokalisierungsinformation der Aktion Folgendes beinhaltet:

   - das Erhalten von zweiten Ortungskoordinaten bezüglich der Aktion (ACT) im Verhältnis zum Wiedergabebereich (ZR) des Videostroms; und
   - das Erhalten von dritten Ortungskoordinaten bezüglich der Aktion (ACT) im Verhältnis zum aktiven Bereich (ZA) des ersten Browsers in Abhängigkeit von den ersten und den zweiten Ortungskoordinaten, wobei die dritten Ortungskoordinaten die Lokalisierungsinformation der Aktion bilden.

4. Verfahren nach Anspruch 1, wobei im Schritt (A) die Referenzdaten von mindestens einer Komponente (REF) erhalten werden, die auf der Webseite (WP1) an einem Punkt angezeigt wird, der den Ursprung eines Koordinatensystems darstellt, das dem aktiven Bereich (ZA) des ersten Browsers (BRW1) zugeordnet ist.

5. Verfahren nach Anspruch 4, wobei im Schritt (B) die ersten Ortungskoordinaten nach dem Erfassen eines Bildes, das in dem Wiedergabebereich (ZR) angezeigt wird, und dann nach dem Orten jeder Komponente (REF) ausgehend vom erfassten Bild im Verhältnis zum Wiedergabebereich erhalten werden.

6. Verfahren nach Anspruch 5, das Folgendes aufweist:

   - das Versenden des erfassten Bildes an eine Server-Vorrichtung zur Bildbearbeitung;
   - das Erkennen von mindestens einer Komponente;
   - das Bestimmen von Lokalisierungskoordinaten der Komponente in Abhängigkeit von einem Lokalisierungs-Koordinatensystem (P2), das dem Wiedergabebereich zugeordnet ist, wobei die Lokalisierungskoordinaten die ersten Ortungskoordinaten bilden.

7. Verfahren nach Anspruch 6, wobei im Schritt (C) das Erhalten der zweiten Ortungskoordinaten das Bestimmen der Lokalisierungskoordinaten der Aktion im Verhältnis zum Lokalisierungs-Koordinatensystem beinhaltet, das dem Wiedergabebereich zugeordnet ist, wobei die Lokalisierungskoordinaten die zweiten Ortungskoordinaten bilden.

8. Verfahren nach Anspruch 7, wobei im Schritt (C) das Erhalten der dritten Ortungskoordinaten Folgendes beinhaltet:

   - Subtrahieren der ersten Koordinaten von den zweiten Koordinaten;
   - Multiplizieren des Ergebnisses der vorausgehenden Subtraktion mit einem Faktor, der die Auflösungsdifferenz zwischen dem auf dem ersten Endgerät wiedergegebenen Videostrom und dem auf dem zweiten Endgerät wiedergegebenen Videostrom berücksichtigt.

9. Verfahren nach einem der Ansprüche 1 bis 8, wobei der erste und der zweite Webbrowser mit dem WebRTC-Standard kompatible Browser sind und im Schritt (A) der auf dem ersten Endgerät wiedergegebenen Videostrom kontinuierlich von dem ersten Webbrowser zu dem zweiten Webbrowser gemäß einem dem WebRTC-Standard entsprechenden Übertragungsprotokoll übertragen wird.

10. Softwareanwendung (JS (WP2)) zum Umsetzen eines Verfahren zum Teilen der Navigation auf einer Webseite (WP1), die in einem Fenster eines ersten Webbrowsers (BRW1) angezeigt wird, der auf einem ersten Endgerät (T1) ausgeführt wird, wobei mindestens ein zweiter Webbrowser (BRW2) auf einem zweiten Endgerät (T2) ausgeführt wird und die Softwareanwendung Codeanweisungen aufweist, deren Ausführung durch den zweiten Webbrowser Folgendes ermöglicht:

   - kontinuierliches Erhalten eines auf dem ersten Endgerät wiedergegebenen und von ihm übertragenen Videostroms durch den zweiten Browser, wobei der Strom die Anzeigedaten der Webseite und Referenzdaten (REF) aufweist, die für einen Anzeigebereich der Webseite (WP1) in dem Fenster des ersten Browsers, genannt aktiver Bereich (ZA) des ersten Browsers, charakteristisch sind, wobei die Referenzdaten durch den ersten Browser grafisch in den aktiven Bereich eingefügt werden;
   - Wiedergeben des Videostroms in einem Wiedergabebereich, der sich in einem Fenster des zweiten Browsers befindet;
   - nach dem Erkennen von mindestens einer Aktion, die von einem Benutzer des zweiten Endgeräts ausgelöst und auf mindestens ein grafisches Element angewendet wird, das in dem Wiedergabebereich angezeigt wird, Erhalten einer Lokalisierungsinformation ausgehend von einer Bewertung der Position des grafischen Elements im Verhältnis zu einem Koordinatensystem, das mit dem aktiven Bereich (ZA) des ersten Browsers verknüpft ist, wobei die Lokalisierungsinformation in Abhängigkeit von ersten Ortungsdaten bezüglich der Referenzdaten im Verhältnis zum Wiedergabebereich bestimmt wird;
   - Übertragen einer Nachricht an den ersten Browser, die einen Aktionstyp beinhaltet, der der erkannten Aktion zugeordnet ist, sowie die Lokalisierungsinformation der Aktion im Hinblick auf das Anwenden der Aktion auf die Webseite in dem Fenster des ersten Browsers in Abhängigkeit vom Inhalt der Nachricht.

11. Softwareanwendung (JS (WP1)) zum Umsetzen eines Verfahren zum Teilen der Navigation auf einer Webseite (WP1), die in einem Fenster eines ersten Webbrowsers (BRW1) angezeigt wird, der auf einem ersten Endgerät (T1 ausgeführt wird, wobei mindestens ein zweiter Webbrowser (BRW2) auf einem zweiten Endgerät (T2) ausgeführt wird und die Softwareanwendung Codeanweisungen aufweist, deren Ausführung durch den ersten Webbrowser Folgendes ermöglicht:

   - Erstellen von Referenzdaten (REF) in dem ersten Browser (BRW1), die für den Anzeigebereich der Webseite (WP1) in dem Fenster des ersten Browsers, genannt aktiver Bereich (ZA) des ersten Browsers, charakteristisch sind, wobei die Referenzdaten grafisch in den aktiven Bereich eingefügt werden, und kontinuierliches Übertragen des auf dem ersten Endgerät wiedergegebenen Videostroms sowie der Referenzdaten (REF) an das zweite Endgerät;
   - Empfangen einer Nachricht von dem zweiten Browser, die einerseits einen Aktionstyp beinhaltet, der mit einer Aktion verknüpft ist, die von einem Benutzer des zweiten Endgeräts ausgelöst und auf mindestens ein grafisches Element angewendet wird, das in dem Wiedergabebereich des Videostroms auf dem zweiten Endgerät angezeigt wird, und andererseits eine Lokalisierungsinformation der Aktion, die ausgehend von einer Bewertung der Position des grafischen Elements im Verhältnis zu den Referenzdaten (REF) erhalten wird, wobei die Lokalisierungsinformation in Abhängigkeit von ersten Ortungsdaten bezüglich der Referenzdaten im Verhältnis zum Wiedergabebereich bestimmt wird;
   - Anwenden der Aktion auf die Webseite in dem Fenster des ersten Browsers in Abhängigkeit vom Inhalt der Nachricht.

**12.** Webbrowser (BRW1, BRW2), in dem eine Softwareanwendung (JS) nach Anspruch 10 oder nach Anspruch 11 ausgeführt wird.

**13.** Kommunikationsendgerät (T1, T2), auf dem ein Webbrowser nach Anspruch 12 installiert ist, wobei das Kommunikationsendgerät ausgebildet ist, um als erstes oder zweites Endgerät in einem Verfahren zum Teilen der Navigation auf einer Webseite nach einem der Ansprüche 1 bis 9 verwendet zu werden.

**Claims**

**1.** Method for co-browsing a webpage (WP1) displayed in a window of a first web browser (BRW1) executed in a first terminal (T1), with at least one second web browser (BRW2) executed in a second terminal (T2), **characterized in that** it comprises:

(A)- continuously obtaining (S23) with the second browser (BRW2) a video stream rendered in the first terminal (T1), said stream being continuously transmitted by the first terminal to the second terminal and comprising display data of the webpage (WP1) and reference data (REF) characteristic of a display zone of said webpage (WP1) in the window of the first browser, which zone is called the active zone (ZA) of the first browser, said reference data being graphically inserted into the active zone by the first browser;
(B)- rendering (S24) the video stream in a rendering zone (ZR) included in a window of the second browser (BRW2);
(C)- following detection (S25) of at least one action (ACT) triggered by a user (U2) of the second terminal (T2), which action is applied to at least one graphical element displayed inside the rendering zone (ZR), obtaining (S26, S27) information on the location of the action on the basis of an evaluation of the position of said graphical element with respect to a coordinate system associated with the active zone (ZA) of the first browser, said location information being determined depending on first position data relative to the reference data with respect to the rendering zone;
(D)- transmitting (S28) to the first browser a message including a type of action associated with the detected action and said information on the location of the action; and
(E)- applying (S29) said action to said webpage (WP1) in the window of the first browser depending on the content of said message.

**2.** Method according to Claim 1, wherein:

- step (A) includes creating in the first browser (BRW1) reference data (REF) characteristic of said active zone (ZA) of the first browser;
- step (B) includes obtaining first positioning coordinates, relative to the reference data (REF), with respect to the rendering zone (ZR) of the video stream.

**3.** Method according to Claim 2, wherein in step (C) the obtainment of information on the location of the action includes:

- obtaining second positioning coordinates relative to said action (ACT) with respect to the rendering zone (ZR); and
- obtaining third positioning coordinates relative to said action (ACT) with respect to said active zone (ZA) of the first browser, depending on said first and second positioning coordinates, said third positioning coordinates forming said information on the location of the action.

**4.** Method according to Claim 1, wherein in step (A) said reference data are obtained on the basis of at least one component (REF) displayed in the webpage (WP1) at a point representing the origin of a coordinate system associated with the active zone (ZA) of the first browser (BRW1).

**5.** Method according to Claim 4, wherein in step (B) said first positioning coordinates are obtained following the capture of an image displayed in said rendering zone (ZR), then the positioning, on the basis of the captured image, of each component (REF) with respect to said rendering zone.

**6.** Method according to Claim 5, comprising:

- sending the captured image to an image-processing server device;
- detecting at least one component;
- determining location coordinates of said component depending on a location position (P2) associated with said rendering zone, said location coordinates forming said first positioning coordinates.

7. Method according to Claim 6, wherein, in step (C), the obtainment of said second positioning coordinates comprises determining location coordinates of said action with respect to the location position associated with said rendering zone, which location coordinates form said second positioning coordinates.

8. Method according to Claim 7, wherein, in step (C), the obtainment of said third positioning coordinates comprises:

- subtracting said first coordinates from said second coordinates;
- multiplying the result of the preceding subtraction by a factor taking into account the resolution difference between the video stream rendered in the first terminal and the video stream rendered in the second terminal.

9. Method according to any one of Claims 1 to 8, wherein the first and second web browsers are browsers compatible with the WebRTC standard, in step (A) the video stream rendered in the first terminal being continuously transmitted from the first web browser to the second web browser using a transmission protocol according to the WebRTC standard.

10. Software application (JS(WP2)) for implementing a method for co-browsing a webpage (WP1) displayed in a window of a first web browser (BRW1) executed in a first terminal (T1), with at least one second web browser (BRW2) executed in a second terminal (T2), said software application containing code instructions the execution of which by the second web browser allows:

- the second browser to continuously obtain a video stream rendered in and transmitted by the first terminal, said stream comprising display data of the webpage and reference data (REF) characteristic of a display zone of said webpage (WP1) in the window of the first browser, which zone is called the active zone (ZA) of the first browser, said reference data being graphically inserted into the active zone by the first browser;
- the video stream to be rendered in a rendering zone included in a window of the second browser;
- following detection of at least one action triggered by a user of the second terminal, which action is applied to at least one graphical element displayed inside the rendering zone, information on the location of the action to be obtained on the basis of an evaluation of the position of said graphical element with respect to a coordinate system associated with the active zone (ZA) of the first browser, said location information being determined depending on first position data relative to the reference data with respect to the rendering zone;
- a message including a type of action associated with the detected action and said information on the location of the action to be transmitted to the first browser with a view to applying said action to said webpage in the window of the first browser depending on the content of said message.

11. Software application (JS(WP1)) for implementing a method for co-browsing a webpage (WP1) displayed in a window of a first web browser (BRW1) executed in a first terminal (T1), with at least one second web browser (BRW2) executed in a second terminal (T2), said software application comprising code instructions the execution of which by the first web browser allows:

- reference data (REF) characteristic of the display zone of said webpage (WP1) in the window of the first browser, which zone is called the active zone (ZA) of the first browser, to be created in the first browser (BRW1), said reference data being graphically inserted into the active zone, and the video stream rendered in the first terminal and said reference data (REF) to be continuously transmitted to the second terminal;
- a message including, on the one hand, an action associated with an action triggered by a user of the second terminal and applied to at least one graphical element displayed in the interior of a rendering zone of the video stream in the second terminal, and, on the other hand, information on the location of the action, which is obtained on the basis of an evaluation of the position of said graphical element with respect to said reference data (REF) to be received from the second browser, said location information being determined depending on first position data relative to the reference data with respect to the rendering zone;
- said action to be applied to said webpage in the window of the first browser depending on the content of said message.

12. Web browser (BRW1, BRW2) in which a software application (JS) according to Claim 10 or according to Claim 11 is executed.

13. Communication terminal (T1, T2) in which a web browser according to Claim 12 is installed, said communication terminal being configured to be used as first or second terminal in a method for co-browsing a webpage according to any one of Claims 1 to 9.

FIG. 1

S20 — Téléchargement de WP1 et WP2 par BRW1 et BRW2

S21 — Initialisation session de partage de WP1 entre BRW1 et BRW2

S22 — BRW1 : Insertion REF dans zone active de BRW1

S23 — Transmission flux vidéo écran T1 à BRW2

S24 — BRW2 : restituer flux vidéo et repérage de REF : *REP1*

S25 — *Action* U2 ?  Non / Oui

S26 — BRW2: Repérage *Action* dans zone de restitution flux vidéo: *REP2*

S27 — BRW2: Repérage *Action* par rapport à zone active de BRW1: *REP3 = F(REP1, REP2)*

S28 — Transmission MSG(*Action*, *REP3*) à BRW1

S29 — BRW1 : appliquer *Action* en fonction de *REP3*

**FIG. 2**

FIG. 3

**FIG. 4**

EP 2 958 031 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050091572 A1

**Littérature non-brevet citée dans la description**

- *WebRTC 1.0: Real-time Communication Between Browsers - W3C Editor's Draft,* 22 Mars 2013, http://dev.w3.org/2011/webrtc/editor/webrtc.html#rtcpeerconnection-interface
- *Overview: Real Time Protocols for Browser-based Applications - draft-ietf-rtcweb-overview-06,* 20 Février 2013, http://datatracker.ietf.org/doc/draft-ietf-rtcweb-overview
- **SAM DUTTON.** *Getting Started with WebRTC, http://www.html5rocks.com/en/tutorials/webrtc/basics*